# EUROPEAN PATENT APPLICATION

(11) **EP 4 498 246 A1**
(43) Date of publication of application: **29.01.2025**
(21) Application number: 24190357.4
(22) Date of filing: 23.07.2024
(51) Int. Cl.: G06F 9/50

(54) **VIRTUAL INFRASTRUCTURE PROVISIONING ON GOVERNMENT CERTIFICATION COMPLIANT AND NON-COMPLIANT ENDPOINTS BASED ON CONFIGURATION**

(30) Priority: 24.07.2023 US 202318225458
(71) Applicant: VMware LLC, Palo Alto, CA 94304 (US)
(72) Inventor: Dimitrov, Alexander, 1766 Sofia (BG); Delcheva, Anna, 1766 Sofia (BG); Pavlov, Daniel, 1766 Sofia (BG); Draganchev, Martin, 1766 Sofia (BG); Aronov, Evgeny, 1766 Sofia (BG)
(74) Representative: Dilg, Haeusler, Schindelmann Patentanwaltsgesellschaft mbH

(57) **Abstract**

The present disclosure is related to devices, systems, and methods for virtual infrastructure provisioning on government compliant and non-compliant endpoints based on configuration. One embodiment includes receiving a request made by a user (232) to provision a catalog item in a cloud computing environment, determining that the user (232) is assigned to a project (228) required to comply with governmental requirements concerning virtual infrastructure, selecting a cloud zone (230) of a cloud region (222) in which to provision the catalog item, wherein the cloud region (222) is configured to provide compliance with the governmental requirements, and deploying the provisioned catalog item in the selected cloud zone (230).

## Description

### BACKGROUND

A data center is a facility that houses servers, data storage devices, and/or other associated components such as backup power supplies, redundant data communications connections, environmental controls such as air conditioning and/or fire suppression, and/or various security systems. A data center may be maintained by an information technology (IT) service provider. An enterprise may utilize data storage and/or data processing services from the provider in order to run applications that handle the enterprises' core business and operational data. The applications may be proprietary and used exclusively by the enterprise or made available through a network for anyone to access and use.

Virtual computing instances (VCIs), such as virtual machines and containers, have been introduced to lower data center capital investment in facilities and operational expenses and reduce energy consumption. A VCI is a software implementation of a computer that executes application software analogously to a physical computer. VCIs have the advantage of not being bound to physical resources, which allows VCIs to be moved around and scaled to meet changing demands of an enterprise without affecting the use of the enterprise's applications. In a software-defined data center, storage resources may be allocated to VCIs in various ways, such as through network attached storage (NAS), a storage area network (SAN) such as fiber channel and/or Internet small computer system interface (iSCSI), a virtual SAN, and/or raw device mappings, among others.

### BRIEF DESCRIPTION OF THE DRAWINGS

Figure 1 is a diagram of a host and a system for virtual infrastructure provisioning on government compliant and non-compliant endpoints based on configuration according to one or more embodiments of the present disclosure.
Figure 2 is a flow chart associated with virtual infrastructure provisioning on government compliant and non-compliant endpoints based on configuration according to one or more embodiments of the present disclosure.
Figure 3 is a diagram of a system for virtual infrastructure provisioning on government compliant and non-compliant endpoints based on configuration according to one or more embodiments of the present disclosure.
Figure 4 is a diagram of a machine for virtual infrastructure provisioning on government compliant and non-compliant endpoints based on configuration according to one or more embodiments of the present disclosure.

### DETAILED DESCRIPTION

As referred to herein, a virtual computing instance (VCI) covers a range of computing functionality. VCIs may include non-virtualized physical hosts, virtual machines (VMs), and/or containers. A VM refers generally to an isolated end user space instance, which can be executed within a virtualized environment. Other technologies aside from hardware virtualization that can provide isolated end user space instances may also be referred to as VCIs. The term "VCI" covers these examples and combinations of different types of VCIs, among others. VMs, in some embodiments, operate with their own guest operating systems on a host using resources of the host virtualized by virtualization software (e.g., a hypervisor, virtual machine monitor, etc.).

Multiple VCIs can be configured to be in communication with each other in an SDDC. In such a system, information can be propagated from a client (e.g., an end user) to at least one of the VCIs in the system, between VCIs in the system, and/or between at least one of the VCIs in the system and a server. SDDCs are dynamic in nature. For example, VCIs and/or various application services, may be created, used, moved, or destroyed within the SDDC. When VCIs are created, various processes and/or services start running and consuming resources. As used herein, "resources" are physical or virtual components that have a finite availability within a computer or SDDC. For example, resources include processing resources, memory resources, electrical power, and/or input/output resources.

While the specification refers generally to VCIs, the examples given could be any type of data compute node, including physical hosts, VCIs, non-VCI containers, and hypervisor kernel network interface modules. Embodiments of the present disclosure can include combinations of different types of data compute nodes.

A user can request a catalog item to be provisioned. A catalog item is a published blueprint that describes virtual infrastructure resources. A cloud administrator can entitle the catalog item to users. Cloud users can request a catalog item which can then be provisioned by the system according to the setup policies and/or governance rules to an appropriate cloud zone. A cloud zone (sometimes referred to herein simply as "zone") may be defined as a group of clusters plus configuration. A cloud zone can be defined as a section of compute resources that are specific to a cloud account type (e.g., Amazon Web Services (AWS), vSphere, etc.). A cloud zone may be associated with (e.g., linked to) a particular geographic region. A cloud zone can be assigned to a project. A project, as referred to herein, may be defined as a group of cloud zones plus configuration. A project may be defined as a logical group that bundles together cloud zones, managed resources, users, and/or entitlements. A project can determine the cloud zone(s) on which a set of users or groups can deploy workloads, a priority value, the maximum number of VCIs to deploy, and a maximum amount of memory that the deployment can use. A project may be defined by using an organizational structure, such as a cost-center, or a specific business group or purpose. There may be a many-to-many relationship between cloud zones and projects.

Where to provision a catalog item can be determined by a development platform. A development platform can be used to configure and/or provision resources in a virtualized environment. Provisioned instances of a catalog item may be referred to as a "deployment." One example of a development platform is vRealize Automation (vRA). vRA is a cloud management layer that sits on top of different clouds. It can provision complex deployments and offer governance and management of these workloads and the resources in the cloud. vRA can support public and/or private clouds. vCenter (vSphere) is one of the private clouds that vRA supports. A development platform can determine where to place a new VCI in accordance with a placement policy. A placement policy is a rule that dictates how the development platform (e.g., an allocation engine of a development platform) should determine where to provision a catalog item. Though the example of vRA is discussed herein, embodiments of the present disclosure are not so limited. A development platform in accordance with the present disclosure can be designed to automate multiple clouds with secure, self-service provisioning.

The example of vRA includes several customer facing components that allow managing virtual infrastructure, cloud templates, and building continuous integration and continuous delivery/continuous deployment (CI/CD) pipelines. VMware cloud assembly is the name of one of those components. It is a cloud-based service that can be used to create and deploy VCIs, applications, and/or services to a cloud infrastructure. A cloud administrator (admin) can configure the cloud vendor infrastructure to which users deploy their cloud templates. A cloud admin can set up projects to link the service users with the infrastructure resources. A cloud admin can delegate the user management and deployment infrastructure to project managers, freeing up customers to focus on their cloud resources. A cloud template developer can create and iterate on templates until they meet development needs, deploy templates to the supporting cloud vendors based on project membership, and/or manage the deployed resources throughout the development lifecycle. A cloud user can request a deployment based on the created templates. The deployment will land on an appropriate endpoint based on the governance rules set up by the cloud admin.

Government agencies and/or institutions have requirements for compliance to various certifications. One example is Federal Risk and Authorization Management Platform (FedRAMP). The goal of certifications like FedRAMP is to guarantee secure cloud services across the federal government by providing a standardized approach to security and risk assessment for cloud technologies and federal agencies.

AWS is a cloud service provider that delivers dedicated endpoints and/or regions that comply with FedRAMP requirements. Those regions are referred to as "GovCloud" regions. It is noted that other providers (e.g., Microsoft Azure) deliver clouds and/or cloud regions that comply with FedRAMP requirements. While the example of AWS may be referred to herein for purposes of illustration, embodiments of the present disclosure are not so limited.

If a vRA cloud user requests a catalog item, that item can be provisioned either on an AWS GovCloud region or on a non-AWS GovCloud (referred to herein as "regular") AWS region depending on the policies and/or governance rules set up by the cloud admin. Embodiments of the present disclosure can determine where to provision a requested catalog item while guaranteeing FedRAMP compliance.

In previous approaches, a user may access the AWS GovCloud or a regular AWS region directly via their separate URLs. For example, a user can input first credentials for a first cloud account on the GovCloud URL to access the GovCloud. The user can input second credentials for a second cloud account on the regular AWS URL to access the regular AWS region.

Embodiments of the present disclosure can receive an input via a vRA user interface (UI) to switch between cloud accounts. Additionally, if a user is assigned to a project that is required to comply with governmental requirements concerning virtual infrastructure (e.g., FedRAMP), a cloud zone of a cloud region configured to provide compliance with the governmental requirements can be selected to provision a catalog item that the user selects. A second user, who selects the same catalog item but is not assigned to a project that is required to comply with governmental requirements, can be provisioned in a cloud zone of a cloud region that is not configured to provide compliance with the governmental requirements. Accordingly, embodiments of the present disclosure can determine where to provision a requested catalog item while guaranteeing FedRAMP compliance.

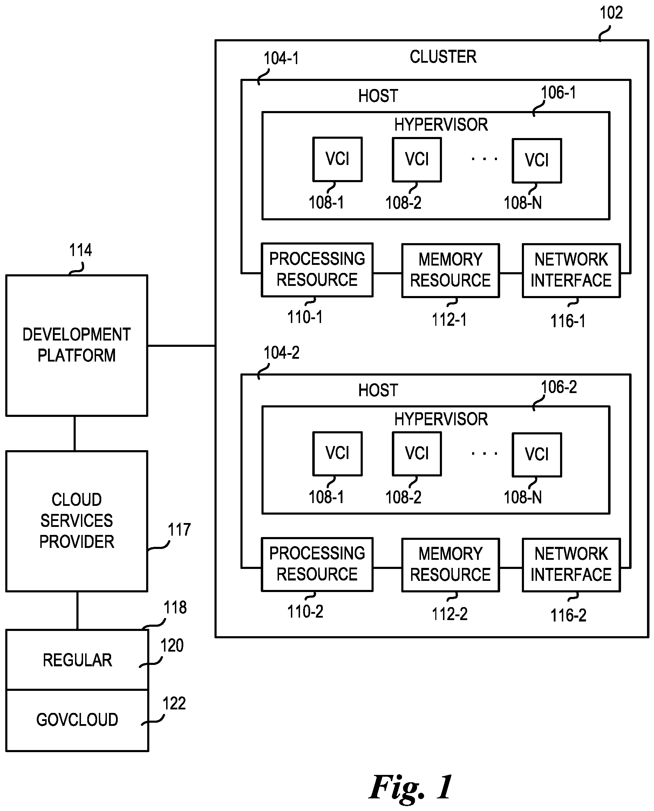

Figure 1 is a diagram of a host and a system for virtual infrastructure provisioning on government compliant and non-compliant endpoints based on configuration according to one or more embodiments of the present disclosure. The system can include a cluster 102 in communication with a development platform 114. The cluster 102 can include a first host 104-1 with processing resources 110-1 (e.g., a number of processors), memory resources 112-1, and/or a network interface 116-1. Similarly, the cluster 102 can include a second host 104-2 with processing resources 110-2, memory resources 112-2, and/or a network interface 116-2. Though two hosts are shown in Figure 1 for purposes of illustration, embodiments of the present disclosure are not limited to a particular number of hosts. For purposes of clarity, the first host 104-1 and/or the second host 104-2 (and/or additional hosts not illustrated in Figure 1) may be generally referred to as "host 104." Similarly, reference is made to "hypervisor 106," "VCI 108," "processing resources 110," memory resources 112," and "network interface 116," and such usage is not to be taken in a limiting sense.

The host 104 can be included in a software-defined data center. A software-defined data center can extend virtualization concepts such as abstraction, pooling, and automation to data center resources and services to provide information technology as a service (ITaaS). In a software-defined data center, infrastructure, such as networking, processing, and security, can be virtualized and delivered as a service. A software-defined data center can include software-defined networking and/or software-defined storage. In some embodiments, components of a software-defined data center can be provisioned, operated, and/or managed through an application programming interface (API).

The host 104-1 can incorporate a hypervisor 106-1 that can execute a number of VCIs 108-1, 108-2, ..., 108-N (referred to generally herein as "VCIs 108"). Likewise, the host 104-2 can incorporate a hypervisor 106-2 that can execute a number of VCIs 108. The hypervisor 106-1 and the hypervisor 106-2 are referred to generally herein as a hypervisor 106. The VCIs 108 can be provisioned with processing resources 110 and/or memory resources 112 and can communicate via the network interface 116. The processing resources 110 and the memory resources 112 provisioned to the VCIs 108 can be local and/or remote to the host 104. For example, in a software-defined data center, the VCIs 108 can be provisioned with resources that are generally available to the software-defined data center and not tied to any particular hardware device. By way of example, the memory resources 112 can include volatile and/or non-volatile memory available to the VCIs 108. The VCIs 108 can be moved to different hosts (not specifically illustrated), such that a different hypervisor manages (e.g., executes) the VCIs 108. The cluster 102 can be in communication with a development platform 114. As previously discussed, the development platform 114 can be vRA, though embodiments of the present disclosure are not so limited. In some embodiments, the development platform 114 can be a server, such as a web server. The development platform 114 can include computing resources (e.g., processing resources and/or memory resources in the form of hardware, circuitry, and/or logic, etc.) to perform various operations, as described in more detail herein. The development platform 114 can be in communication with a cloud service provider 117. In some embodiments, the cloud service provider 117 can provide services of a public cloud (e.g., AWS, Microsoft Azure, etc.). In some embodiments, the cloud service provider 117 can provide services of a private cloud (e.g., vSphere). It is noted that while one cloud service provider 117 is shown in Figure 1, embodiments of the present disclosure can include more than one cloud service provider 117. The cloud service provider 117 can provide a cloud 118 that can include a regular region 120 and a government region 122, as described herein.

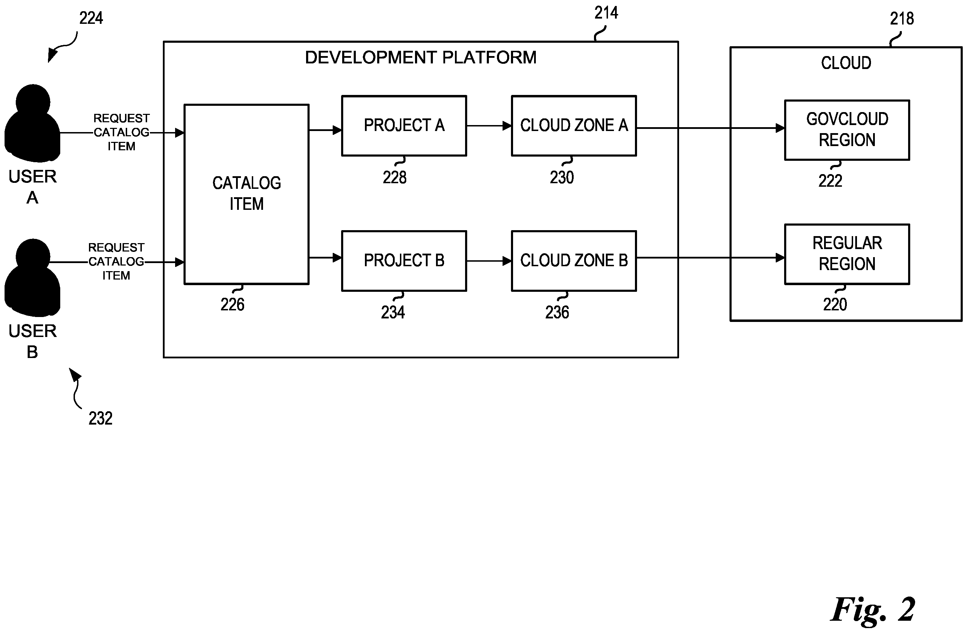

Figure 2 is a flow chart associated with virtual infrastructure provisioning on government compliant and non-compliant endpoints based on configuration according to one or more embodiments of the present disclosure. A first user 224 requests a catalog item 226 via a development platform 214. Before the request is made, a cloud admin previously added cloud zones (two cloud zones in the example illustrated in Figure 2, though embodiments herein are not so limited). Cloud zone A 230 is linked to GovCloud region 220 of the cloud 218. Cloud zone B 236 is linked to a regular cloud region 222. The GovCloud region 220 and the regular cloud region 222 can be provided by a cloud service provider, as described herein. The cloud admin added projects (two projects in the example illustrated in Figure 2, though embodiments herein are not so limited). Project A 228 contains cloud zone A 230. Project B contains cloud zone B 236. The cloud admin can assign users from different departments to the different projects. In an example, users in department A are required to use FedRAMP compliant virtual infrastructure(s) and are thus assigned to project A 228. Users in department B are not required to use FedRAMP compliant virtual infrastructure(s) (e.g., have no FedRAMP compliance requirement) and are thus assigned to project B 234. The cloud admin can additionally create the catalog item 226 that includes some virtual infrastructure. It is noted that while one catalog item 226 is shown in Figure 2, catalogs can contain any number of catalog items.

As previously discussed, the first user 224 requests the catalog item 226 via the development platform 214. Based on the user's project membership to project A 228, cloud zone A 230 is selected for provisioning the virtual infrastructure. Stated differently, the first user 224 gets their deployment on the GovCloud region 220.

The second user 232 can request the catalog item 226. Based on the second user's membership to project B 234, cloud zone B 236 is selected for provisioning the virtual infrastructure. Stated differently, the second user 232 gets their deployment on the regular AWS region.

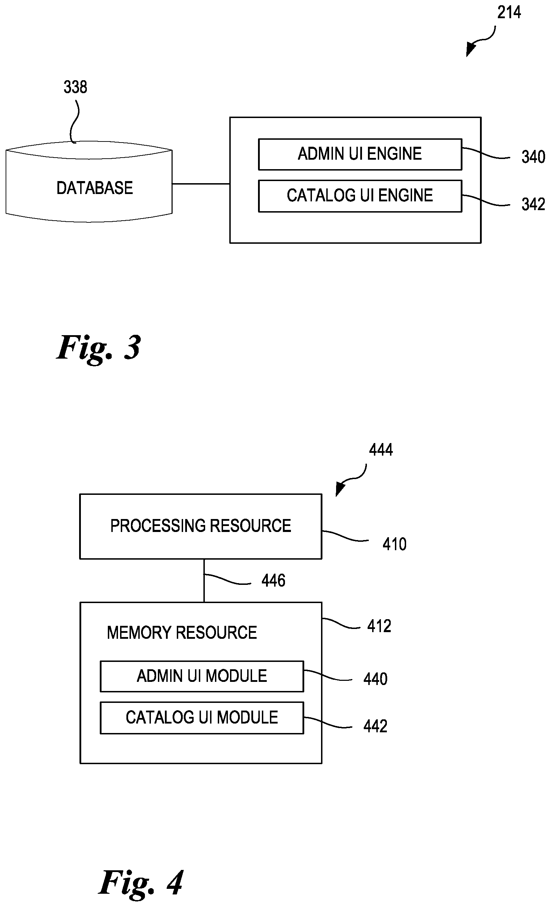

Figure 3 is a diagram of a system 314 for virtual infrastructure provisioning on government compliant and non-compliant endpoints based on configuration according to one or more embodiments of the present disclosure. The system 314 can include a database 338 and/or a number of engines, for example admin UI engine 340 and/or catalog UI engine 342, and can be in communication with the database 338 via a communication link. The system 314 can include additional or fewer engines than illustrated to perform the various functions described herein. The system can represent program instructions and/or hardware of a machine (e.g., machine 444 as referenced in Figure 4, etc.). As used herein, an "engine" can include program instructions and/or hardware, but at least includes hardware. Hardware is a physical component of a machine that enables it to perform a function. Examples of hardware can include a processing resource, a memory resource, a logic gate, an application specific integrated circuit, a field programmable gate array, etc.

The number of engines can include a combination of hardware and program instructions that is configured to perform a number of functions described herein. The program instructions (e.g., software, firmware, etc.) can be stored in a memory resource (e.g., machine-readable medium) as well as hard-wired program (e.g., logic). Hard-wired program instructions (e.g., logic) can be considered as both program instructions and hardware. In some embodiments, the admin UI engine 340 can include a combination of hardware and program instructions that is configured to provide an administrator UI. The administrator UI can be configured to receive an input to define a first cloud zone linked to a first cloud region configured to provide compliance with governmental requirements concerning virtual infrastructure. The administrator UI can be configured to receive an input to define a second cloud zone linked to a second cloud region not configured to provide compliance with the governmental requirements. The administrator UI can be configured to receive an input to associate a first project with the first cloud zone. The administrator UI can be configured to receive an input to associate a second project with the second cloud zone. The administrator UI can be configured to receive an input to assign a first user to the first project. The administrator UI can be configured to receive an input to assign a second user to the second project.

In some embodiments, the catalog UI engine 342 can include a combination of hardware and program instructions that is configured to provide a catalog UI. The catalog UI can be configured to receive a request made by the first user to provision a catalog item in a cloud computing environment. The catalog UI can be configured to select the first cloud zone in which to provision the catalog item responsive to a determination that the first user is assigned to the first project. The catalog UI can be configured to deploy the provisioned catalog item in the first cloud zone.

Figure 4 is a diagram of a machine for virtual infrastructure provisioning on government compliant and non-compliant endpoints based on configuration according to one or more embodiments of the present disclosure. The machine 444 can utilize software, hardware, firmware, and/or logic to perform a number of functions. The machine 444 can be a combination of hardware and program instructions configured to perform a number of functions (e.g., actions). The hardware, for example, can include a number of processing resources 410and a number of memory resources 412, such as a machine-readable medium (MRM) or other memory resources 412. The memory resources 412 can be internal and/or external to the machine 444 (e.g., the machine 444 can include internal memory resources and have access to external memory resources). In some embodiments, the machine 444 can be a virtual computing instance (VCI). The program instructions (e.g., machine-readable instructions (MRI)) can include instructions stored on the MRM to implement a particular function (e.g., an action such as receiving a plurality of metrics, as described herein). The set of MRI can be executable by one or more of the processing resources 404. The memory resources 412 can be coupled to the machine 444 in a wired and/or wireless manner. For example, the memory resources 412 can be an internal memory, a portable memory, a portable disk, and/or a memory associated with another resource, e.g., enabling MRI to be transferred and/or executed across a network such as the Internet. As used herein, a "module" can include program instructions and/or hardware, but at least includes program instructions.

Memory resources 412 can be non-transitory and can include volatile and/or non-volatile memory. Volatile memory can include memory that depends upon power to store information, such as various types of dynamic random access memory (DRAM) among others. Non-volatile memory can include memory that does not depend upon power to store information. Examples of non-volatile memory can include solid state media such as flash memory, electrically erasable programmable read-only memory (EEPROM), phase change memory (PCM), 3D cross-point, ferroelectric transistor random access memory (FeTRAM), ferroelectric random access memory (FeRAM), magneto random access memory (MRAM), Spin Transfer Torque (STT)-MRAM, conductive bridging RAM (CBRAM), resistive random access memory (RRAM), oxide based RRAM (OxRAM), negative-or (NOR) flash memory, magnetic memory, optical memory, and/or a solid state drive (SSD), etc., as well as other types of machine-readable media.

The processing resources 410 can be coupled to the memory resources 412 via a communication path 446. The communication path 446 can be local or remote to the machine 444. Examples of a local communication path 446 can include an electronic bus internal to a machine, where the memory resources 412 are in communication with the processing resources 410 via the electronic bus. Examples of such electronic buses can include Industry Standard Architecture (ISA), Peripheral Component Interconnect (PCI), Advanced Technology Attachment (ATA), Small Computer System Interface (SCSI), Universal Serial Bus (USB), among other types of electronic buses and variants thereof. The communication path 446 can be such that the memory resources 412 are remote from the processing resources 410, such as in a network connection between the memory resources 412 and the processing resources 410. That is, the communication path 446 can be a network connection. Examples of such a network connection can include a local area network (LAN), wide area network (WAN), personal area network (PAN), and the Internet, among others.

As shown in Figure 4, the MRI stored in the memory resources 412 can be segmented into a number of modules 440, 442 that when executed by the processing resources 410 can perform a number of functions. As used herein a module includes a set of instructions included to perform a particular task or action. The number of modules 440, 442 can be sub-modules of other modules. For example, the catalog UI module 442 can be a submodule of the admin UI module 440 and/or can be contained within a single module. Furthermore, the number of modules 440, 442 can comprise individual modules separate and distinct from one another. Examples are not limited to the specific modules 440, 442 illustrated in Figure 4.

Each of the number of modules 440, 442 can include program instructions and/or a combination of hardware and program instructions that, when executed by a processing resource 410, can function as a corresponding engine as described with respect to Figure 3. For example, the admin UI module 440 can include program instructions and/or a combination of hardware and program instructions that, when executed by a processing resource 410, can function as the admin UI engine 340, though embodiments of the present disclosure are not so limited. The machine 444 can include an admin UI module 440, which can include instructions to provide an administrator UI. In some embodiments, the administrator UI is configured to receive an input to define a first cloud zone linked to a first cloud region configured to provide compliance with governmental requirements concerning virtual infrastructure, receive an input to define a second cloud zone linked to a second cloud region not configured to provide compliance with the governmental requirements, receive an input to associate a first project with the first cloud zone, receive an input to associate a second project with the second cloud zone, receive an input to assign a first user to the first project, and receive an input to assign a second user to the second project.

The machine 444 can include a catalog UI module 442, which can include instructions to provide a catalog UI. In some embodiments the catalog UI is configured to receive a request made by the first user to provision a catalog item in a cloud computing environment, select the first cloud zone in which to provision the catalog item responsive to a determination that the first user is assigned to the first project, and deploy the provisioned catalog item in the first cloud zone.

The present disclosure is not limited to particular devices or methods, which may vary. The terminology used herein is for the purpose of describing particular embodiments, and is not intended to be limiting. As used herein, the singular forms "a", "an", and "the" include singular and plural referents unless the content clearly dictates otherwise. Furthermore, the words "can" and "may" are used throughout this application in a permissive sense (i.e., having the potential to, being able to), not in a mandatory sense (i.e., must). The term "include," and derivations thereof, mean "including, but not limited to."

The figures herein follow a numbering convention in which the first digit or digits correspond to the drawing figure number and the remaining digits identify an element or component in the drawing. Similar elements or components between different figures may be identified by the use of similar digits. For example, 108 may reference element "08" in Figure 1, and a similar element may be referenced as 508 in Figure 5. A group or plurality of similar elements or components may generally be referred to herein with a single element number. For example, a plurality of reference elements 104-1, 104-2, ..., 104-N may be referred to generally as 104. As will be appreciated, elements shown in the various embodiments herein can be added, exchanged, and/or eliminated so as to provide a number of additional embodiments of the present disclosure. In addition, as will be appreciated, the proportion and the relative scale of the elements provided in the figures are intended to illustrate certain embodiments of the present invention, and should not be taken in a limiting sense.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. Various advantages of the present disclosure have been described herein, but embodiments may provide some, all, or none of such advantages, or may provide other advantages.

In the foregoing Detailed Description, some features are grouped together in a single embodiment for the purpose of streamlining the disclosure. This method of disclosure is not to be interpreted as reflecting an intention that the disclosed embodiments of the present disclosure have to use more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method, comprising:
receiving a request made by a user (224) to provision a catalog item (226) in a cloud computing environment;
determining that the user (224) is assigned to a project (228) required to comply with governmental requirements concerning virtual infrastructure;
selecting a cloud zone (230) of a cloud region (222) in which to provision the catalog item (226), wherein the cloud region (222) is configured to provide compliance with the governmental requirements; and
deploying the provisioned catalog item (226) in the selected cloud zone (230).

2. The method of claim 1, wherein selecting the cloud zone (230) of the cloud region (222) in which to provision the catalog item (226) includes selecting the cloud zone (230) from among a plurality of available cloud zones (230, 236), and wherein the plurality of available cloud zones (230, 236) include a cloud zone (236) of a cloud region (220) that is not configured to provide compliance with the governmental requirements.

3. The method of claim 1 or 2, comprising at least one of the following features:
wherein the request does not specify the cloud zone (230, 236);
wherein the method includes providing compliance with the governmental requirements irrespective of any user selection;
wherein the governmental requirements concerning virtual infrastructure are Federal Risk and Authorization Management Program, FedRAMP, requirements.

4. The method of any of claims 1 to 3, wherein the method includes:
receiving another request made by a different user (232) to provision the catalog item (226) in the cloud computing environment;
determining that the different user (232) is not assigned to a project (228) required to comply with governmental requirements concerning virtual infrastructure;
selecting a cloud zone (236) of a different cloud region (220) in which to provision the catalog item (226), wherein the different cloud region (220) is not configured to provide compliance with the governmental requirements; and
deploying the provisioned catalog item (226) in the selected cloud zone (236) of the different cloud region (220).

5. The method of any of claims 1 to 4, comprising at least one of the following features:
wherein determining that the user (224) is assigned to a project (228) required to comply with governmental requirements concerning virtual infrastructure includes determining a role of the user (224) within an organization;
wherein determining that the user (224) is assigned to a project (228) required to comply with governmental requirements concerning virtual infrastructure includes consulting a Lightweight Directory Access Protocol, LDAP, server.

6. A non-transitory machine-readable medium having instructions stored thereon which, when executed by a processor, cause the processor to:
provide an administrator user interface, UI, wherein the administrator UI is configured to:
receive an input to define a first cloud zone (230) linked to a first cloud region (222) configured to provide compliance with governmental requirements concerning virtual infrastructure;
receive an input to define a second cloud zone (236) linked to a second cloud region (220) not configured to provide compliance with the governmental requirements;
receive an input to associate a first project (228) with the first cloud zone (230);
receive an input to associate a second project (234) with the second cloud zone (236);
receive an input to assign a first user (224) to the first project (228);
receive an input to assign a second user (232) to the second project (234); and
provide a catalog UI, wherein the catalog UI is configured to:
receive a request made by the first user (224) to provision a catalog item (226) in a cloud computing environment;
select the first cloud zone (230) in which to provision the catalog item (226) responsive to a determination that the first user (224) is assigned to the first project (228); and
deploy the provisioned catalog item (226) in the first cloud zone (230).

7. The medium of claim 6, wherein the catalog UI is configured to:
receive a request made by the second user (232) to provision the catalog item (226) in the cloud computing environment;
select the second cloud zone (236) in which to provision the catalog item (226) responsive to a determination that the second user (232) is assigned to the second project (234); and
deploy the provisioned catalog item (226) in the second cloud zone (236).

8. The medium of claim 7, wherein the first user (224) is a member of a first department of an organization and the second user (232) is a member of a second department of the organization.

9. The system of any of claims 6 to 8, wherein the request made by the first user (224) does not specify any cloud zone (230, 236) for provisioning the catalog item (226).

10. The medium of any of claims 6 to 9, wherein the catalog UI is configured to:
receive a request made by the second user (232) to provision the catalog item (226) in the cloud computing environment;
select the first cloud zone (230) in which to provision the catalog item (226) responsive to a determination that the catalog item (226) exceeds a threshold; and
deploy the provisioned catalog item (226) in the first cloud zone (230).

11. The medium of claim 10, comprising at least one of the following features:
wherein the catalog item (226) exceeding the threshold includes the catalog item (226) exceeding a particular graphics processing unit, GPU, quantity;
wherein the catalog item (226) exceeding the threshold includes the catalog item (226) exceeding a particular memory size.

12. A system, comprising:
an admin UI engine (340) configured to provide an administrator user interface, UI, wherein the administrator UI is configured to:
receive an input to define a first cloud zone (230) linked to a first cloud region (222) configured to provide compliance with governmental requirements concerning virtual infrastructure;
receive an input to define a second cloud zone (236) linked to a second cloud region (220) not configured to provide compliance with the governmental requirements;
receive an input to associate a first project (228) with the first cloud zone (230);
receive an input to associate a second project (234) with the second cloud zone (236);
receive an input to assign a first user (224) to the first project (228);
receive an input to assign a second user (232) to the second project (234); and
a catalog UI engine (342) configured to provide a catalog UI, wherein the catalog UI is configured to:
receive a request made by the first user (224) to provision a catalog item (226) in a cloud computing environment;
select the first cloud zone (230) in which to provision the catalog item (226) responsive to a determination that the first user (224) is assigned to the first project (228); and
deploy the provisioned catalog item (226) in the first cloud zone (230).

13. The system of claim 12, comprising at least one of the following features:
wherein the request made by the first user (224) does not specify any cloud zone (230, 236);
wherein the request made by the first user (224) does not specify any cloud region (220, 222).

14. The system of claim 12 or 13, wherein the catalog UI engine (342) is configured to display a plurality of catalog items (226).

15. The system of claim 14, wherein the catalog UI engine (342) is configured to display to the first user (224) only catalog items (226) of the plurality of catalog items (226) that are in compliance with the governmental requirements.
